# EUROPEAN PATENT SPECIFICATION

(11) **EP 0 553 893 B1**
(45) Date of publication and mention of the grant of the patent: **01.10.1997**
(21) Application number: 93104665.0
(22) Date of filing: 25.01.1990
(51) Int. Cl.: F24J 2/04, F24J 2/20, F24F 7/06, H01L 31/042

(54) **Arrangement for preheating ventilation air for a building**
Vorrichtung zur Vorwärmung von Luft zur Gebäudelüftung
Appareil de préchauffage de l'air de ventilation pour un immeuble

(30) Priority: 27.01.1989 US 302359
(43) Date of publication of application: 04.08.1993
(62) Divisional of application: 90300815.9
(73) Proprietor: SOLARWALL INTERNATIONAL LIMITED, St. Peter Port, Guernsey, Channel Islands (GB)
(72) Inventor: Hollick, John C., Ontario, L6A 1G2 (CA); Peter, Rolf W., CH-8053 Zürich (CH)
(74) Representative: Körber, Wolfhart, Dr.rer.nat.

(56) References cited:
- WO-A-80/00488
- DE-A- 2 917 098
- DE-A- 2 929 219
- DE-A- 3 006 905
- DE-A- 3 014 445
- DE-A- 3 314 637
- DE-A- 3 334 052
- FR-A- 2 469 674
- FR-A- 2 537 258
- GB-A- 2 073 872
- US-A- 3 412 728
- US-A- 4 122 675
- US-A- 4 323 054
- US-A- 4 471 758
- US-A- 4 774 932

## Description

This invention relates generally to an arrangement for preheating ventilation air for a building having a sun-facing surface through which heat from the interior of the building escapes, including a solar radiation-absorbing collector panel mounted in spaced relationship on said sun-facing surface, thus defining an air collection space between itself and the surface, and being exposed to the ambience, air inlet means by which ambient air is admitted to said air-collection space, whereby air in said space can be heated with solar heat from said collector panel and with heat being lost from the interior of said building, and air-moving means having an inlet at the top of that air-collecting space and an outlet within the interior of the building, whereby the air-moving means, when in operation, establishes a negative pressure differential across the collector panel with respect to the ambience.

Commercial, industrial, domestic and apartment buildings require ventilation, and it is common for the natural leakage around doors, wall ceiling joints etc. found in a standard building construction to allow sufficient air to enter the building. A pressure drop from the exterior to the interior of the building can arise from many factors, such as high winds, exhaust fans and combustion air for fuel-burning furnaces. This tends to draw outside air into the building through any crack or opening.

The problem with the conventional approach is that the amount of ventilation air is not controlled, the temperature in the building near the outside walls is lower than average and less comfortable, and additional heat must be provided to heat the outside air to room temperature during the heating season.

This problem has in many cases been solved by installing gas, oil or electric heaters and air-moving fans to heat the incoming air. When solar panels are used to heat a building, air is recirculated from the building through the collector and back. During the heating season, the ambient temperature is lower than the room temperature, and therefore a recirculating solar collector operates at a much reduced efficiency level.

There have been disclosed two methods and apparatus which avoid using consumable energy, like oil to heat incoming air for a building. Instead of simply recirculating interior air from the building through a solar collector and back to the building, fresh make-up air for ventilation purposes is introduced into the building after first passing the air through a solar collector located on a sun-facing wall of the building. In Canadian Patent No. 1,196,825 issued November 19, 1985, the solar collector consists of glazing over a darkened wall.

In the above-mentioned apparatus known from the US 4 774 932, the collector consists of one piece of a darkened collector panel with corrugations running vertically, and collecting means for withdrawing the heated air from vertical grooves near the top of the panel.

This arrangement is less expensive for accomplishing the same goal. Its efficiency in collecting the total heat created by the solar radiation in the collector panel can be reduced in some locations or on sloped walls. The air rising in the grooves heats up, becomes lighter and moves faster, and its initially laminar flow may turn into turbulent flow, mixing with cold air and losing heat to the outside. The taller the solar panel is, the more intensively the sun heats the panel, and the stronger a wind blows. The heat loss grows with the height of the panel as its temperature is highest at the top. This loss is aggravated if the panel does not have a selective coating.

In order to avoid the aforementioned heat losses due to the boundary layer turning turbulent, it is known from the DE-A-29 29 219 to provide the absorber with a multitude of openings through which air can be drawn into the intermediate space between the absorber and the building wall. With these known apparatus any convection of the air at the outside of the absorber is prevented as far as possible. The disadvantage here is that through this measure the outer surface ot the absorber is no longer available to be used for effectively heating the air to be drawn in.

From the US-A-4 323 054 another solar energy collection system is already known in which air flows along the rear side of a collector panel while likewise providing openings in the collector panel. These openings are spaced vertically such that a rising boundary layer of air forming below each opening will be deflected into the rear air passageway before it becomes turbulent. The collector panel of this known system, however, is located behind a wall of glass or plastics. The sun's radiation can therefore not strike the collector panel directly with the effect that with the known system neither a heating of outside air at the collector panel nor the use of the panel as a photovoltaic panel is possible.

The design of a roofing tile as photovoltaic panel is described in the DE-A-33 14 637. This known roofing tile provides an air channel at its rear side through which the rear side is cooled by air flowing past. This air can subsequently be used for heating or can be stored. A treatment or use of the air moving past the known roofing tiles is not described in this publication.

It is the object of the invention to achieve an as complete as possible exploitation of the sun's radiation falling on the building wall.

According to the invention this object is achieved in this apparatus by the fact that the aforementioned air inlet means comprises a plurality of inlet openings distributed over the collector panel in such distances that outside air passes upwardly exclusively in laminar now along the whole outside of the panel, before entering said air collection space through said inlet openings, the collector panel being constructed of a plurality of substantially identical and overlapping or adjacent subpanels and the inlet openings being formed by spaces left open between the overlapping or adjacent sub-panels and the overlapping or adjacent sub-panels being photovoltaic panels.

In order to achieve a constant speed of the air flow on the rear side of the collector panel it is advantageous if the horizontal cross-section of the air collection space decreases in the direction away from the air-moving means. It is furthermore advantageous for the laminar air flow on the outside of the collector panel if the area of the air inlet openings per unit collector panel area increases with increasing distance from the air-moving means.

A higher arrangement stability and a more constant air flow are obtained by the air collection space between the collector panel and the surface being subdivided by walls into a plurality of parallel channels.

Several embodiments of this invention are illustrated in the accompanying drawings in which like numerals denote like parts throughout the several views and in which
Fig. 1 is a perspective view the basic structure of a make-up or ventilation air system for a building to which the invention has been applied,
Fig. 2 is a vertical sectional view through an embodiment of this invention utilizing identical overlapping tiles as sub-panels and heated air flow to the air inlet openings,
Fig. 2a is a vertical sectional view, to a larger scale, of a portion of the embodiment shown in Fig. 2,
Fig. 2b is an elevational view similar to Fig. 2b showing an alternative embodiment.

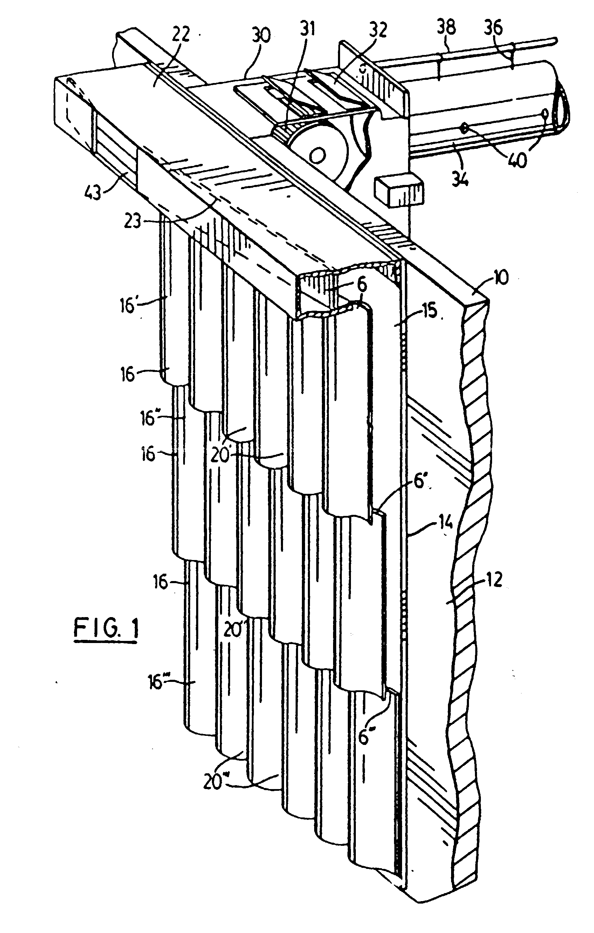

Attention is first directed to Figure 1 which shows a partly broken-away perspective view of a system for carrying out the present invention. A building wall is shown in part at 10 in the Figure, this being typically a block-and-brick composite structure. As with all building walls, even those well-insulated, a steady heat loss is experienced through the wall when the outside temperature is below the inside temperature.

The wall 10 has an outer surface 12 to which may be affixed a mounting plate 14. Secured to the mounting plate 14 or wall 10 are a number of sub-panels 16', 16", 16"' etc. together constituting the collector panel 16 which is coated on the outside with a solar radiation absorbing material, such as dark paint.

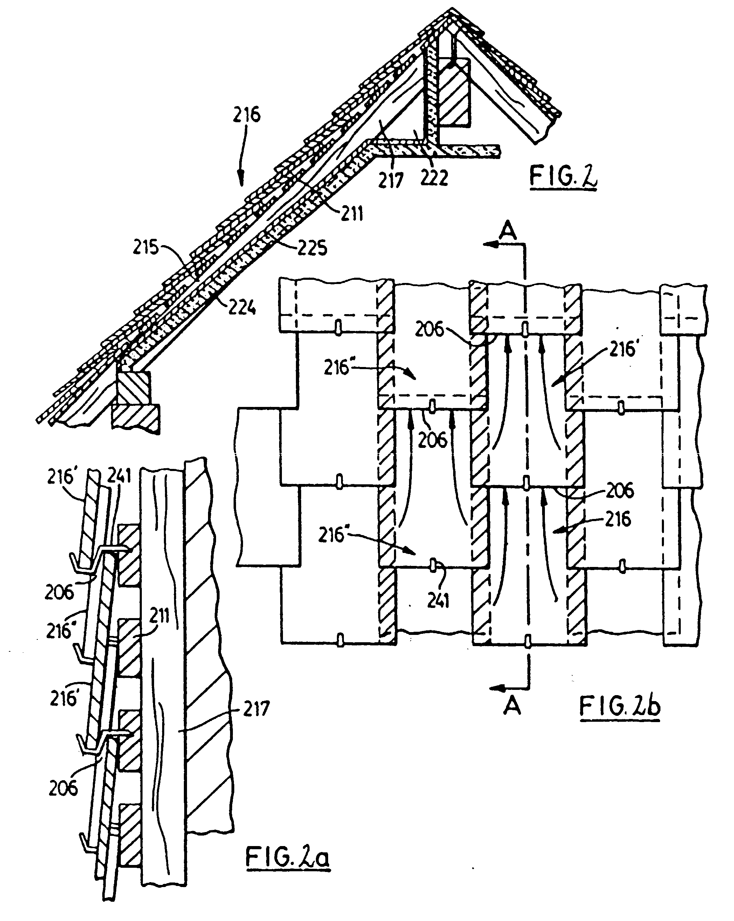

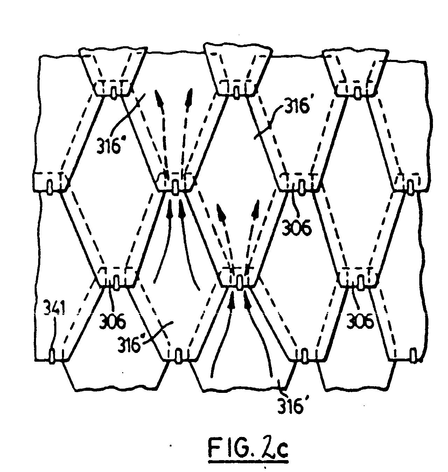

In Fig. 1 the sub-panels 16', 16" etc. are illustrated as corrugated plates. According to the invention, however, flat sub-panels designed as photovoltaic panels are used here as these will be described more specifically further on in connection with Figures 2 to 2c.

Far more desirable than dark paint would be a "selective coating" with high absorption for solar radiation and little infra-red heat emission at temperatures occurring at the collector panel on a sunny day, to keep total energy losses low.

The sub-panels 16', 16" etc. are spaced from the mounting plate 14 at decreasing distances leaving openings 6", 6"' etc. between the sub-panels, which serve as air inlet openings through which the heated outside air enters an air collection space 15.

The air collection space 15 is defined between and by the collector panels 16 and the mounting plate 14, and in turn communicates with a plenum 22 at the top end of the panel 16. The cross-section of the plenum 22 can be made to widen toward a fan housing 30 by adjusting the position of a separator wall 23 such that substantially equal amounts of air are gathered along the length of the plenum 22 from different regions of the air collection space 15. The fan housing 30 contains a conventional fan or air impeller 31 and includes motorized dampers 32 which can be adjusted to allow air from the interior of the building to be mixed with heated air coming from the plenum 22.

Communicating with the housing 30 is a fabric air duct 34 which is preferably flame retardant and made of polyfabric, the duct 34 being suspended by a plurality of duct hangers 36 from a suitably strung support wire or rod 38. The air duct has a plurality of openings 40 through which the heated outside air can pass into the building. By appropriately sizing the openings 40, the air can enter the interior of the building as a high velocity air jet, thus promoting good mixing with the air in the building and minimizing stratification.

It is preferred that the duct 34 be located at the ceiling level for the sake of convenience in industrial and commercial buildings. Other levels and routings for the duct 34 may be chosen in apartment buildings.

The fan within the housing 30 would typically be sized to meet the ventilation requirements and eliminate any negative pressure in the building. A positive pressure can be achieved with outside air entering the building through the fan 31, the air being heated by solar heat, recovered building heat loss and stratified heat found near a high ceiling. Air can leave the building through cracks and other openings where previously air had entered.

It will be noted that the plenum 22 overhangs the corrugated panel 16. When the sun stands high in the sky, this arrangement reduces overheating the air. Alternatively, the plenum 22 can be provided with a by-pass damper 43 which can be opened when heated air is not required.

It will further be appreciated that the outside air which is heated by the sub-panels 16', 16" etc. will pass upwardly as a well-defined laminar stream along the grooves 20" and will be drawn through the inlet openings 6', 6" etc. into the air collection space 15 well before either turbulence or wind can disturb the laminar hot-air stream to the point where heat could be lost.

Assuming for the moment that there were no inlet openings 6", 6"' etc. and that the panel 16 were very high, then the laminar air streams would heat up further and would rise faster and faster until the well-defined laminar flow would turn turbulent, and would widen and heat up more outside air. This would mean that part of the heat would not be recovered.

In constructions according to this invention, turbulent flow can be prevented, even in windy conditions, if the distance between inlet openings 6', 6" and 6"' is chosen to be sufficiently short. The more closely the inlet openings 6 are spaced e.g. the smaller the sub-panel height in Figure 1, the smaller is the possibility of heat being lost under adverse conditions, such as the existence of wind.

Figure 2 is a sectional view of an embodiment of the invention showing a "porous" solar collector panel acceptable as a facade for domestic housing. The panel 216 is made up of a plurality of overlapping small sub-panels 216', 216" etc. shown enlarged in Figure 2a. The two Figures indicate that the construction of the panel is applicable as a roof covering as well as a south-wall facade. Rafters 217 and boards 211 serve to support the sub-panels 216', 216" etc. The thickness of the individual panel determines the height of the air inlet openings 206. The overlap on the sides of the sub-panels limits the width of the openings. Figure 2b is an elevational view of the panel 216, and indicates the heated air flow to the air inlet openings 206. From the openings 206, the air flows to the plenum 222 through the air collection channels 215, in part defined by ducting material 225 covering the thermal insulation 224 of the attic room and rafters 217.

The sub-panels are made of transparent cover plates, namely glass plates with photovoltaic electric panels.

The use of photovoltaic panels as collector panels 16 in accordance with this invention is of particular interest for the future. Photovoltaic cells operate well under a temperature of 30°C and with decreasing efficiency at higher temperatures. They need to be cooled for best performance in summer. Using water as a cooling agent leads to expensive constructions. Using ventilation air for photovoltaic cell cooling in accordance with this embodiment of the invention satisfies both requirements without additional cost. Figures 2 - 2b show that the inlet airflow provides a very efficient heat transfer from the panels 216 to the air. The panels are secured by fastening means 241 which may be used in addition as electrical contacts.

Figure 2c shows an alternative tile construction to that illustrated in Figure 6b. In Figure 6c, the individual tiles are hexagonal and are identified by the numerals 316', 316" etc. The air-intake openings are identified by the numeral 306.

## Claims

1. Arrangement for preheating ventilation air for a building (10) having a sun-facing surface (12) through which heat from the interior of the building (10) escapes, including
a) a solar radiation-absorbing collector panel (16) mounted in spaced relationship on said sun-facing surface (12), thus defining an air collection space (15, 15b) between itself and the surface (12) and being exposed to the ambience,
b) air inlet means by which ambient air is admitted to said air-collection space (15, 15b), whereby air in said space (15, 15b) can be heated with solar heat from said collector panel (16) and with heat being lost from the interior of said building (10) and
c) air-moving means (30, 31, 32, 34) having an inlet at the top of that air-collecting space and an outlet (40) within the interior of the building (10), whereby the air-moving means, when in operation, establishes a negative pressure differential across the collector panel (16) with respect to the ambience,
**characterized in that**
d) said air inlet means comprises a plurality of inlet openings (6) distributed over the collector panel (16) in such distances that outside air passes upwardly exclusively in laminar flow along the whole outside of the panel (16) before entering said air collection space (15,15b) through said inlet openings (6),
e) the collector panel (16) is constructed of a plurality of substantially identical and overlapping or adjacent subpanels (216', 216"), the inlet openings being formed by spaces (206) left open between the overlapping or adjacent subpanels (216', 216"),
f) the overlapping or adjacent subpanels (216', 216") are photovoltaic panels.

2. The arrangement claimed in claim 1, characterized in that the horizontal cross-section of the air collection space (15) decreases in the direction away from the air-moving means (30, 31, 32, 34).

3. The arrangement claimed in claim 1 or 2, characterized in that the area of the air inlet openings (6) per unit collector panel area increases with increasing distance from the air-moving means (30, 31, 32, 34).

4. The arrangement claimed in one of the claims 1 - 3, characterized in that the air collection space (15, 15b) between the collector panel (16) and the surface (12) is subdivided by walls (17b) into a plurality of parallel channels.

## Patentansprüche

1. Anordnung zur Vorwärmung von Lüftungsluft für ein Gebäude (10) mit einer sonnenzugewandten Oberfläche (12) durch welche Wärme vom Inneren des Gebäudes (10) ausströmt, die folgendes beinhaltet:
a) eine Sonnenstrahlungs-Absorptionskollektortafel (16), die beabstandet auf der sonnenzugewandten Oberfläche (12) befestigt ist, womit ein Luftsammelraum (15, 15b) zwischen ihr und der Oberfläche (12) bestimmt wird, und die der Umgebung ausgesetzt ist,
b) Lufteinlaßmittel, durch die dem Luftsammelraum (15, 15b) Umgebungsluft zugeführt wird, wobei Luft in dem Raum (15, 15b) mit Sonnenwärme von der Kollektortafel (16) und mit Verlustwärme vom Inneren des Gebäudes (10) beheizbar ist, und
c) Luft-Bewegungsmittel (30, 31, 32, 34) mit einem Einlaß an der Oberseite des Luftsammelraums und einem Auslaß (40) im Inneren des Gebäudes (10), wobei die Luft-Bewegungsmittel im Betrieb eine negative Druckdifferenz über die Kollektortafel (16) relativ zur Umgebung aufbauen,
**dadurch gekennzeichnet, daß**
d) die Lufteinlaßmittel eine Vielzahl von Einlaßöffnungen (6) aufweisen, die über die Kollektortafel (16) mit derartigen Abständen verteilt sind, daß sich Außenluft aufwärts ausschließlich in laminarer Strömung entlang der gesamten Außenseite der Tafel (16) entlangbewegt, bevor sie in den Sammelraum (15, 15b) durch die Einlaßöffnungen (6) eintritt,
e) die Kollektortafel (16) aus einer Vielzahl von im wesentlichen identischen und überlappenden oder aneinandergrenzenden Teiltafeln (216', 216") aufgebaut ist, wobei die Einlaßöffnungen durch zwischen den überlappenden oder aneinandergrenzenden Teiltafeln (216', 216'') offengelassenen Lücken (206) ausgebildet sind,
f) die überlappenden oder aneinandergrenzenden Teiltafeln (216', 216") fotovoltaische Tafeln sind.

2. Anordnung nach Anspruch 1, dadurch gekennzeichnet, daß der Querschnitt des Luftsammelraums (15) in der von den Luft-Bewegungsmitteln (30, 31, 32, 34) abgewandten Richtung abnimmt.

3. Anordnung nach Anspruch 1 oder 2, dadurch gekennzeichnet, daß der Bereich der Lufteinlaßöffnungen (6) je Kollektortafeleinheit mit zunehmendem Abstand von den Luft-Bewegungsmitteln (30, 31, 32, 34) zunimmt.

4. Anordnung nach einem der Ansprüche 1 bis 3, dadurch gekennzeichnet, daß der Luftsammelraum (15, 15b) zwischen der Kollektortafel (16) und der Oberfläche (12) durch Wände (17b) in eine Vielzahl von parallelen Kanälen unterteilt ist.

## Revendications

1. Agencement pour préchauffer de l'air de ventilation d'un immeuble (10) ayant une surface (12) dirigée vers le soleil à travers laquelle la chaleur provenant de l'intérieur de l'immeuble (10) s'échappe, comportant
a) un panneau formant collecteur absorbant le rayonnement solaire (16) monté selon une relation espacée sur ladite surface (12) dirigée vers le soleil, définissant ainsi un espace de collecte d'air (15, 15b) entre lui-même et la surface (12) et étant exposé à l'air ambiant,
b) des moyens d'entrée d'air par lesquels l'air ambiant est admis vers ledit espace de collecte d'air (15, 15b), de sorte que l'air situé dans ledit espace (15, 15b) peut être chauffé par la chaleur solaire provenant dudit panneau formant collecteur (16), et par la chaleur perdue en provenance de l'intérieur dudit immeuble (10) et
c) des moyens de déplacement d'air (30, 31, 32, 34) ayant une entrée au niveau de la partie supérieure de cet espace de collecte d'air et une sortie (40) située à l'intérieur de l'immeuble (10), de sorte que les moyens de déplacement d'air, lorsqu'ils fonctionnent, établissent un différentiel de pression négatif à travers le panneau formant collecteur (16) par rapport à la pression ambiante,
caractérisé en ce que
d) lesdits moyens d'entrée d'air comportent plusieurs ouvertures d'entrée d'air (6) réparties sur le panneau formant collecteur (16) en étant espacées d'une distance telle que l'air extérieur passe vers le haut exclusivement selon un écoulement laminaire le long de tout l'extérieur du panneau (16), avant de pénétrer dans ledit espace de collecte d'air (15, 15b) à travers lesdites ouvertures d'entrée (6),
e) le panneau formant collecteur (16) est constitué de plusieurs sous-panneaux se chevauchant ou adjacents et à peu près identiques (216', 216"), les ouvertures d'entrée étant constituées par des espaces (206) laissés ouverts entre les sous-panneaux se chevauchant ou adjacents (216', 216"),
f) les sous-panneaux se chevauchant ou adjacents (216', 216") sont des panneaux photovoltaïques.

2. Agencement selon la revendication 1, caractérisé en ce que la section transversale horizontale de l'espace de collecte d'air (15) décroît dans la direction s'éloignant des moyens de déplacement d'air (30, 31, 32, 34).

3. Agencement selon la revendication 1 ou 2, caractérisé en que la surface des ouvertures d'entrée d'air (6) par unité de surface de panneau formant collecteur augmente avec l'augmentation de la distance à partir des moyens de déplacement d'air (30, 31, 32, 34).

4. Agencement selon l'une quelconque des revendications 1 à 3, caractérisé en ce que l'espace de collection d'air (15, 15b) situé entre le panneau formant collecte (16) et la surface (12) est subdivisé par des parois (17b) en plusieurs canaux parallèles.
